# EUROPEAN PATENT APPLICATION

(11) **EP 4 779 471 A1**
(43) Date of publication of application: **22.07.2026**
(21) Application number: 24867444.2
(22) Date of filing: 18.09.2024
(51) Int. Cl.: G06F 9/50

(54) **CLUSTER AND COMMUNICATION METHOD**

(30) Priority: 19.09.2023 CN 202311211303
(71) Applicant: Huawei Cloud Computing Technologies Co., Ltd., Gui'an New District, Guizhou 550025 (CN)
(72) Inventor: LI, Mohua, Guiyang, Guizhou 550025 (CN); CHEN, Lei, Guiyang, Guizhou 550025 (CN); CHEN, Lv, Guiyang, Guizhou 550025 (CN); XIE, Huaguo, Guiyang, Guizhou 550025 (CN); DING, Meng, Guiyang, Guizhou 550025 (CN); YE, Chuan, Guiyang, Guizhou 550025 (CN); GONG, Lei, Guiyang, Guizhou 550025 (CN); PENG, Qian, Guiyang, Guizhou 550025 (CN); SHAN, Chuang, Guiyang, Guizhou 550025 (CN); GAO, Xiaoqiu, Guiyang, Guizhou 550025 (CN)
(74) Representative: Goddar, Heinz J.
(86) International application number: PCT/CN2024/119420
(87) International publication number: WO 2025/061036

(57) **Abstract**

This application discloses a cluster and a communication method, to present various resources **in** a pooled manner and decouple resource pools, so as to improve resource utilization. The cluster **in** this application includes: a data processing **unit** pool and a plurality of compute resource pools of different types. The data processing **unit** pool includes a plurality of data processing units, and any one of the plurality of compute resource pools includes a plurality of compute resources. The data processing **unit** pool is connected to the plurality of compute resource pools through a high-speed interconnect bus. The data processing **unit** pool is configured to manage communication between the plurality of compute resource pools and the exterior of the cluster, communication between the plurality of compute resource pools, and communication inside any one of the compute resource pools.

## Description

This application claims priority to Chinese Patent Application No. 202311211303.3, filed with the China National Intellectual Property Administration on September 19, 2023 and entitled "CLUSTER AND COMMUNICATION METHOD", which is incorporated herein by reference in its entirety.

### TECHNICAL FIELD

Embodiments of this application relate to the field of cloud technologies, and in particular, to a cluster and a communication method.

### BACKGROUND

In a cloud service system, a cloud vendor adds an offload card to a physical server in the system, so that a part of tasks (functions) of a processor in the physical server are offloaded to the card for processing, to reduce load of the processor in the physical server and improve performance of the entire cloud service system.

Currently, a cloud service system includes a plurality of physical servers. For any one of the plurality of physical servers, the physical server includes a series of necessary hardware resources such as a central processing unit, a memory, a network interface card, and a hard disk drive, and is additionally provided with an offload card. The offload card has a dedicated processor and a storage. Therefore, the offload card may replace the central processing unit to complete a series of tasks such as resource scheduling, network forwarding, and storage frontend acceleration. In this way, the central processing unit of the physical server can process more additional tasks.

Because a local task peak is present in the cloud service system, in other words, some physical servers in the system need to process a large quantity of tasks while some other physical servers need to process only a small quantity of tasks, utilization of offload cards on some servers is high while utilization of offload cards on some other physical servers is low, resulting in a resource waste.

### SUMMARY

Embodiments of this application provide a cluster and a communication method, to present various resources in a pooled manner and decouple resource pools, so as to improve resource utilization.

A first aspect of embodiments of this application provides a cluster. The cluster includes a data processing unit pool and a plurality of compute resource pools of different types. The data processing unit pool includes a plurality of data processing units, and any one of the plurality of compute resource pools includes a plurality of compute resources.

The data processing unit pool is connected to the plurality of compute resource pools through a high-speed interconnect bus. In other words, a communication connection between any one of the compute resource pools and the exterior of the cluster may be established through the high-speed interconnect bus and the data processing unit pool; a communication connection between the plurality of compute resource pools may also be established through the high-speed interconnect bus and the data processing unit pool; and a communication connection inside any one of the compute resource pools may also be established through the high-speed interconnect bus and the data processing unit pool. It can be learned that the data processing unit pool may be used to manage communication between the plurality of compute resource pools and the exterior of the cluster, communication between the plurality of compute resource pools, and communication inside any one of the compute resource pools.

It can be learned from the foregoing cluster that, in the cluster, compute resources of various types are deployed in a pooled manner. The plurality of compute resource pools are decoupled and may be configured based on a type of a cloud service that needs to be provided by the cluster, to improve performance and resource utilization of the cluster. In the cluster, data processing units are also deployed in a pooled manner to form a data processing unit pool that serves as a communication scheduling center of the cluster, to implement centralized allocation and utilization of the data processing units in the pool, so as to improve utilization of the data processing units.

In a possible implementation, the data processing unit pool and the plurality of compute resource pools are configured in a plurality of racks, and a rack in which the data processing unit pool is configured and a rack in which any one of the compute resource pools is configured are different racks. In the foregoing implementation, the data processing unit pool and the plurality of compute resource pools are separately configured in the plurality of racks. The rack in which the data processing unit pool is configured and the rack in which any one of the compute resource pools is configured are usually different racks. Similarly, a rack in which a compute resource pool is configured and a rack in which another compute resource pool is configured are usually different racks.

In a possible implementation, the plurality of data processing units include a general-purpose processing unit and a plurality of accelerated processing units. The general-purpose processing unit is configured to allocate at least one of the plurality of accelerated processing units to a compute resource that has a communication requirement in the plurality of compute resource pools, and the at least one accelerated processing unit allocated to the compute resource meets the communication requirement of the compute resource. In the foregoing implementation, when any compute resource in the plurality of compute resource pools has a communication requirement, the general-purpose processing unit may allocate at least one of the plurality of accelerated processing units to the compute resource, in other words, establish a connection between the compute resource and the at least one accelerated processing unit allocated to the compute resource, so that the at least one accelerated processing unit allocated to the compute resource can meet the communication requirement of the compute resource. In a possible implementation, the plurality of data processing units include a general-purpose processing unit and a plurality of accelerated processing units. The general-purpose processing unit is configured to establish a first communication path between the plurality of compute resource pools and the exterior of the cluster, a first communication path between the plurality of compute resource pools, and a first communication path inside any one of the compute resource pools. The plurality of accelerated processing units are configured to establish a second communication path between the plurality of compute resource pools and the exterior of the cluster, a second communication path between the plurality of compute resource pools, and a second communication path inside any one of the compute resource pools. In the foregoing implementation, the plurality of data processing units include one or more general-purpose processing units and the plurality of accelerated processing units. The one or more general-purpose processing units are configured to establish a first communication path between any compute resource in the plurality of compute resource pools and the exterior of the cluster, a first communication path between compute resources in any two of the compute resource pools, and a first communication path between two compute resources in any one of the compute resource pools. The plurality of accelerated processing units are configured to establish a second communication path between any compute resource in the plurality of compute resource pools and the exterior of the cluster, a second communication path between compute resources in any two compute resource pools, and a second communication path between two compute resources in any one of the compute resource pools.

In a possible implementation, the general-purpose processing unit and the plurality of accelerated processing units are deployed inside the data processing unit pool. In the foregoing implementation, in the plurality of data processing units in the data processing unit pool, there is one general-purpose processing unit and one accelerated processing unit inside any data processing unit. In this case, the general-purpose processing unit and the accelerated processing unit are coupled to each other.

In a possible implementation, the plurality of accelerated processing units are deployed inside the data processing unit pool, the general-purpose processing unit is deployed outside the data processing unit pool, and the exterior of the data processing unit pool is the interior of at least one compute resource pool. In the foregoing implementation, in the plurality of data processing units included in the data processing unit pool, there is only one accelerated processing unit inside any data processing unit. In addition, there is usually one general-purpose processing unit, and the general-purpose processing unit may be remotely deployed. In other words, the general-purpose processing unit is deployed in a compute resource pool or some compute resource pools, rather than in any data processing unit in the data processing unit pool. In this case, the general-purpose processing unit and the accelerated processing unit are decoupled.

In a possible implementation, the first communication path between the plurality of compute resource pools and the exterior of the cluster, with any compute resource in the plurality of compute resource pools and the exterior of the cluster as endpoints, passes through the general-purpose processing unit and at least one of the plurality of accelerated processing units. The first communication path between the plurality of compute resource pools, with compute resources in any two of the compute resource pools as endpoints, passes through the general-purpose processing unit and at least one of the plurality of accelerated processing units. The first communication path inside any one of the compute resource pools, with two compute resources in any one of the compute resource pools as endpoints, passes through the general-purpose processing unit and at least one of the plurality of accelerated processing units. In the foregoing implementation, because of different start points and end points, first communication paths may be specifically classified into three types: the first communication path between the plurality of compute resource pools and the exterior of the cluster; the first communication path between the plurality of compute resource pools; and the first communication path inside any one of the compute resource pools. However, the three types of first communication paths all pass through a general-purpose processing unit and at least one accelerated processing unit.

In a possible implementation, the second communication path between the plurality of compute resource pools and the exterior of the cluster, with any compute resource in the plurality of compute resource pools and the exterior of the cluster as endpoints, passes through at least one of the plurality of accelerated processing units. The second communication path between the plurality of compute resource pools, with compute resources in any two of the compute resource pools as endpoints, passes through at least one of the plurality of accelerated processing units. The second communication path inside any one of the compute resource pools, with two compute resources in any one of the compute resource pools as endpoints, passes through at least one of the plurality of accelerated processing units. In the foregoing implementation, because of different start points and end points, second communication paths may be specifically classified into three types: the second communication path between the plurality of compute resource pools and the exterior of the cluster; the second communication path between the plurality of compute resource pools; and the second communication path inside any one of the compute resource pools. However, the three types of second communication paths all pass only through at least one accelerated processing unit.

In a possible implementation, the general-purpose processing unit establishes connections between the plurality of accelerated processing units and compute resources in the plurality of compute resource pools by issuing tokens. For any one of the plurality of accelerated processing units, a quantity of tokens that can be received by the accelerated processing unit is equal to a quantity of compute resources that can be connected to the accelerated processing unit. In the foregoing implementation, in a round of token issuing, the general-purpose processing unit sends a token issuing message to a 1^{st} accelerated processing unit. The accelerated processing unit applies for a token based on the message, and establishes a connection to a compute resource. Then, the accelerated processing unit may determine whether a token bucket of the accelerated processing unit is full. If the token bucket is full, it indicates that all tokens are obtained, and the general-purpose processing unit is notified, so that the general-purpose processing unit removes the accelerated processing unit from the plurality of accelerated processing units. Then, the accelerated processing unit may continue to send the token issuing message to a next accelerated processing unit until the token issuing message is returned to the general-purpose processing unit. In this way, this round of token issuing is completed, and a next round of token issuing may start. In this case, after the general-purpose processing unit completes token issuing for all the accelerated processing units, any one of the plurality of accelerated processing units is connected to at least one compute resource. It can be learned that, for any one of the plurality of accelerated processing units, a quantity of tokens that can be received by the accelerated processing unit is equal to a quantity of compute resources that can be connected to the accelerated processing unit.

In a possible implementation, when a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit. In the foregoing implementation, when the high-speed interconnect bus supported by the accelerated processing unit and the high-speed interconnect bus supported by the compute resource are the same, the compute resource and the accelerated processing unit may be connected through the high-speed interconnect bus. When the high-speed interconnect bus supported by the accelerated processing unit and the high-speed interconnect bus supported by the compute resource are different, the compute resource and the accelerated processing unit are connected through the high-speed interconnect bus supported by the compute resource, the adapter device, and the high-speed interconnect bus supported by the accelerated processing unit. The adapter device is configured to implement conversion between the high-speed interconnect bus supported by the compute resource and the high-speed interconnect bus supported by the accelerated processing unit.

In a possible implementation, the plurality of compute resource pools include at least two of the following: a central processing unit (central processing unit, CPU) pool, a neural network processing unit (neural network processing unit, NPU) pool, a graphics processing unit (graphics processing unit, GPU) pool, a memory pool, and a solid-state disk (solid-state disk, SSD) pool. The CPU pool includes a plurality of CPUs, the NPU pool includes a plurality of NPUs, the GPU pool includes a plurality of GPUs, the memory pool includes a plurality of memories, and the SSD pool includes a plurality of SSDs.

In a possible implementation, any one of the compute resource pools includes a plurality of compute resources for deploying a cloud instance that provides a cloud service, and the cloud instance includes any one of the following: a compute resource, a virtual machine, a container, and a micro virtual machine.

A second aspect of embodiments of this application provides a communication method. The method is implemented by using a cluster. The cluster includes a data processing unit pool and a plurality of compute resource pools of different types. The data processing unit pool includes a plurality of data processing units, any one of the plurality of compute resource pools includes a plurality of compute resources, and the data processing unit pool is connected to the plurality of compute resource pools through a high-speed interconnect bus. The method includes: The data processing unit pool manages communication between the plurality of compute resource pools and the exterior of the cluster, communication between the plurality of compute resource pools, and communication inside any one of the compute resource pools.

It can be learned from the foregoing method that, in the cluster, compute resources of various types are deployed in a pooled manner. The plurality of compute resource pools are decoupled and may be configured based on a type of a cloud service that needs to be provided by the cluster, to improve performance and resource utilization of the cluster. In the cluster, data processing units are also deployed in a pooled manner to form a data processing unit pool that serves as a communication scheduling center of the cluster, to implement centralized allocation and utilization of the data processing units in the pool, so as to improve utilization of the data processing units.

In a possible implementation, the data processing unit pool and the plurality of compute resource pools are configured in a plurality of racks, and a rack in which the data processing unit pool is configured and a rack in which any one of the compute resource pools is configured are different racks.

In a possible implementation, the plurality of data processing units include a general-purpose processing unit and a plurality of accelerated processing units. The method further includes: The general-purpose processing unit allocates at least one of the plurality of accelerated processing units to a compute resource that has a communication requirement in the plurality of compute resource pools, to cause the at least one accelerated processing unit allocated to the compute resource to meet the communication requirement of the compute resource.

In a possible implementation, the plurality of data processing units include a general-purpose processing unit and a plurality of accelerated processing units. That the data processing unit pool manages communication between the plurality of compute resource pools and the exterior of the cluster, communication between the plurality of compute resource pools, and communication inside any one of the compute resource pools includes: The general-purpose processing unit establishes a first communication path between the plurality of compute resource pools and the exterior of the cluster, a first communication path between the plurality of compute resource pools, and a first communication path inside any one of the compute resource pools. The plurality of accelerated processing units establishes a second communication path between the plurality of compute resource pools and the exterior of the cluster, a second communication path between the plurality of compute resource pools, and a second communication path inside any one of the compute resource pools.

In a possible implementation, the general-purpose processing unit and the plurality of accelerated processing units are deployed inside the data processing unit pool.

In a possible implementation, the plurality of accelerated processing units are deployed inside the data processing unit pool, the general-purpose processing unit is deployed outside the data processing unit pool, and the exterior of the data processing unit pool is the interior of at least one compute resource pool.

In a possible implementation, the first communication path between the plurality of compute resource pools and the exterior of the cluster, with any compute resource in the plurality of compute resource pools and the exterior of the cluster as endpoints, passes through the general-purpose processing unit and at least one of the plurality of accelerated processing units. The first communication path between the plurality of compute resource pools, with compute resources in any two of the compute resource pools as endpoints, passes through the general-purpose processing unit and at least one of the plurality of accelerated processing units. The first communication path inside any one of the compute resource pools, with two compute resources in any one of the compute resource pools as endpoints, passes through the general-purpose processing unit and at least one of the plurality of accelerated processing units.

In a possible implementation, the second communication path between the plurality of compute resource pools and the exterior of the cluster, with any compute resource in the plurality of compute resource pools and the exterior of the cluster as endpoints, passes through at least one of the plurality of accelerated processing units. The second communication path between the plurality of compute resource pools, with compute resources in any two of the compute resource pools as endpoints, passes through at least one of the plurality of accelerated processing units. The second communication path inside any one of the compute resource pools, with two compute resources in any one of the compute resource pools as endpoints, passes through at least one of the plurality of accelerated processing units.

In a possible implementation, the method further includes: The general-purpose processing unit establishes connections between the plurality of accelerated processing units and compute resources in the plurality of compute resource pools by issuing tokens. For any one of the plurality of accelerated processing units, a quantity of tokens that can be received by the accelerated processing unit is equal to a quantity of compute resources that can be connected to the accelerated processing unit.

In a possible implementation, when a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit.

In a possible implementation, the plurality of compute resource pools include at least two of the following: a CPU pool, an NPU pool, a GPU pool, a memory pool, and an SSD pool. The CPU pool includes a plurality of CPUs, the NPU pool includes a plurality of NPUs, the GPU pool includes a plurality of GPUs, the memory pool includes a plurality of memories, and the SSD pool includes a plurality of SSDs.

In a possible implementation, any one of the compute resource pools includes a plurality of compute resources for deploying a cloud instance that provides a cloud service, and the cloud instance includes any one of the following: a compute resource, a virtual machine, a container, and a micro virtual machine.

A third aspect of embodiments of this application provides a cloud service system. The cloud service system includes a plurality of clusters according to any one of the first aspect or the possible implementations of the first aspect.

A fourth aspect of embodiments of this application provides a compute device cluster. The compute device cluster includes at least one compute device, and each compute device includes a processor and a storage. The storage is configured to store instructions. The processor is configured to cause, based on the instructions, the compute device cluster to perform the method according to any one of the second aspect or the possible implementations of the second aspect.

A fifth aspect of embodiments of this application provides a computer storage medium. The computer storage medium stores one or more instructions. When the instructions are executed by one or more computers, the one or more computers are caused to perform the method according to any one of the second aspect or the possible implementations of the second aspect.

A sixth aspect of embodiments of this application provides a computer program product. The computer program product stores instructions. When the instructions are executed by a computer, the computer is caused to perform the method according to any one of the second aspect or the possible implementations of the second aspect.

In the cluster provided in embodiments of this application, compute resources of various types are deployed in a pooled manner. The plurality of compute resource pools are decoupled and may be configured based on a type of a cloud service that needs to be provided by the cluster, to improve performance and resource utilization of the cluster. In the cluster, data processing units are also deployed in a pooled manner to form a data processing unit pool that serves as a communication scheduling center of the cluster, to implement centralized allocation and utilization of the data processing units in the pool, so as to improve utilization of the data processing units.

### BRIEF DESCRIPTION OF DRAWINGS

FIG. 1 is a diagram of a structure of a cloud service system according to an embodiment of this application;
FIG. 2 is a diagram of a structure of a cluster according to an embodiment of this application;
FIG. 3 is a diagram of another structure of a cluster according to an embodiment of this application;
FIG. 4 is a diagram of another structure of a cluster according to an embodiment of this application;
FIG. 5 is a diagram of another structure of a cluster according to an embodiment of this application;
FIG. 6 is a diagram of a structure of token issuing according to an embodiment of this application;
FIG. 7 is a schematic flowchart of token issuing according to an embodiment of this application;
FIG. 8 is a diagram of another structure of a cluster according to an embodiment of this application;
FIG. 9 is a diagram of a communication method according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram of a computer cluster in which computer devices are connected through a network according to an embodiment of this application.

### DESCRIPTION OF EMBODIMENTS

Embodiments of this application provide a cluster and a communication method, to present various resources in a pooled manner and decouple resource pools, so as to improve resource utilization.

In the specification, the claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In a cloud service system, a cloud vendor adds an offload card to a physical server in the system, so that a part of tasks (functions) of a processor in the physical server are offloaded to the card for processing, to reduce load of the processor in the physical server and improve performance of the entire cloud service system.

Currently, a cloud service system includes a plurality of physical servers. For any one of the plurality of physical servers, the physical server includes a series of necessary hardware resources such as a central processing unit, a memory, a network interface card, and a hard disk drive, and is additionally provided with an offload card. The offload card has a dedicated processor and a storage. Therefore, the offload card may replace the central processing unit to complete a series of tasks such as resource scheduling, network forwarding, and storage frontend. In this way, the central processing unit of the physical server can process more additional tasks.

Because a local task peak is present in the cloud service system, in other words, some physical servers in the system need to process a large quantity of tasks while some other physical servers need to process only a small quantity of tasks, utilization of offload cards on some servers is high while utilization of offload cards on some other physical servers is low, resulting in a resource waste.

Further, when the offload card needs to additionally perform a newly added task (function), it is usually difficult to expand a new function of the offload card due to limited resources of the offload card, resulting in limiting application of the entire cloud service system in various new scenarios.

Further, if a physical server is configured to provide a cloud service in an artificial intelligence (Artificial Intelligence, AI) scenario, a neural network model in the AI scenario usually has an independent data communication plane during training, and the offload card on the physical server cannot be directly used. As a result, a new offload card needs to be additionally disposed for independent use during model training, leading to a sharp increase in costs.

Further, due to a limitation of a process, a specification of the offload card on the physical server cannot be updated in real time with the industry. In other words, the offload card on the physical server cannot be quickly replaced. This affects performance of the entire cloud service system.

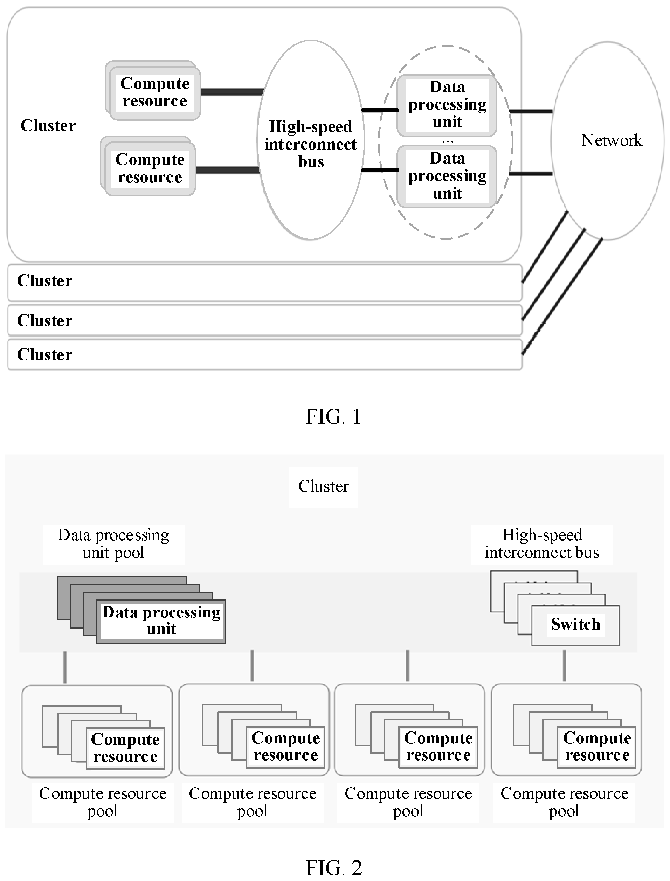

To resolve the foregoing problem, embodiments of this application provide a cloud service system. As shown in FIG. 1 (where FIG. 1 is a diagram of a structure of the cloud service system according to an embodiment of this application), the cloud service system includes a plurality of clusters (pods), and the plurality of clusters may be connected through a network (for example, a data center network (data center network, DCN), where the data center network may be the Ethernet, or the like). In the plurality of clusters, one cluster may externally provide one or more types of cloud services. For example, a cluster may externally provide an AI service on a cloud. For another example, a cluster may externally provide a conventional cloud computing service. For another example, a cluster may externally provide a conventional cloud storage service.

For any one of the plurality of clusters, as shown in FIG. 2 (where FIG. 2 is a diagram of a structure of a cluster according to an embodiment of this application), the cluster may also be referred to as a hypernode (hypernode). The cluster may include a plurality of rack (rack)-level hardware pools. The plurality of hardware pools include a data processing unit (data processing unit, DPU) pool and a plurality of compute resource pools (which may also be referred to as computational power resource pools) of different types. The following separately describes the data processing unit pool and the compute resource pool.

For any one of the plurality of compute resource pools of different types, the compute resource pool may include a plurality of compute resources of a same type. For example, the compute resource pool may be a central processing unit (central processing unit, CPU) pool, and the CPU pool includes a plurality of CPUs. For another example, the compute resource pool may be a neural network processing unit (neural network processing unit, NPU) pool, and the NPU pool includes a plurality of NPUs. For another example, the compute resource pool may be a graphics processing unit (graphics processing unit, GPU), and the GPU pool includes a plurality of GPUs. For another example, the compute resource pool may be a tensor processing unit (tensor processing unit, TPU), and the TPU pool includes a plurality of TPUs. For another example, the compute resource pool may be a memory pool, and the memory pool includes a plurality of memories. For another example, the compute resource pool may be a solid-state disk (solid-state disk, SSD) pool, and the SSD pool includes a plurality of SSDs. It can be learned that the plurality of compute resource pools included in the cluster may be any combination of the foregoing at least one type of compute resource pool. It should be noted that a main type of a compute resource pool included in the cluster is associated with a type of a cloud service that can be provided by the cluster. For example, if the cluster is configured to provide an AI service, a plurality of compute resource pools included in the cluster mainly include a CPU pool, an NPU pool, and a GPU pool. For another example, if the cluster is configured to provide a cloud computing service for general load, a plurality of compute resource pools included in the cluster mainly include a CPU pool. For another example, if the cluster is configured to provide a cloud storage service, the plurality of compute resource pools included in the cluster mainly include an SSD pool.

The data processing unit pool includes a plurality of data processing units, and the data processing units may be presented in various forms such as a software-defined infrastructure (software-defined infrastructure, SDI) chip, an application-specific integrated circuit (application-specific integrated circuit, ASIC) chip, a field programmable gate array (field programmable gate array, FPGA) chip, or a programmable logic device (programmable logic device, PLD) chip. It should be noted that, in the cluster, the data processing unit pool may be used as an offload card pool for a plurality of compute resource pools, and may be configured to centrally manage communication between the plurality of compute resource pools and the exterior of the cluster (for example, another cluster, or a conventional data center or an availability zone in a cloud service system), communication between any two of the compute resource pools, and communication inside any one of the resource pools. Therefore, the data processing unit pool may be considered as egress of the cluster, and is configured to access the exterior of the cluster. The data processing unit pool may also be considered as a forwarding interface between the plurality of compute resource pools, and is configured to connect the plurality of compute resource pools. In addition, the data processing unit pool may also be considered as a forwarding interface between a plurality of compute resources included in any one of the compute resource pools, and is configured to connect the plurality of compute resources included in the compute resource pool.

It should be noted that the data processing unit pool may be connected to the plurality of compute resource pools through a high-speed interconnect bus (which may include a high-speed interconnect switch, a high-speed interconnect communication connection line, and the like). In other words, a communication connection between any one of the compute resource pools and the exterior of the cluster may be established through the high-speed interconnect bus and the data processing unit pool; a communication connection between the plurality of compute resource pools may also be established through the high-speed interconnect bus and the data processing unit pool; and a communication connection inside any one of the compute resource pools may also be established through the high-speed interconnect bus and the data processing unit pool. It can be learned that, the data processing unit pool may centrally manage, based on the high-speed interconnect bus, communication between the plurality of compute resource pools and the exterior of the cluster, communication between any two of the compute resource pools, and communication inside any one of the compute resource pools. The high-speed interconnect bus may be any one of the following: a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators protocol (cache coherent interconnect for accelerators, CCIX), or the like.

It should be further noted that, for any compute resource included in any one of the compute resource pools, the compute resource may be used to deploy one or more cloud instances that provide cloud services, and the cloud instances include any one of the following: a compute resource (that is, a bare metal server), a virtual machine (virtual machine, VM), a container (docker), and a micro virtual machine (microVM). It can be learned that a cloud instance cluster may be deployed in any one of the compute resource pools, and the cloud instance cluster may be configured to externally provide a cloud service of a type.

It should be further noted that, from a perspective of physical hardware, the data processing unit pool and a plurality of compute resource pools are respectively configured in a plurality of racks (racks). Generally, a rack in which a data processing unit pool is configured (that is, a rack in which the plurality of data processing units included in the data processing unit pool are located) and a rack in which any one of the compute resource pools is configured (that is, a rack in which a plurality of compute resources included in the compute resource pool are located) are usually different racks. Similarly, a rack in which a compute resource pool is configured (that is, a rack in which a plurality of compute resources included in the compute resource pool are located) and a rack in which another compute resource pool is configured (that is, a rack in which a plurality of compute resources included in the another compute resource pool are located) are usually different racks. It can be learned that there is physical isolation between the data processing unit pool and the plurality of compute resource pools, and the isolation is at a rack level.

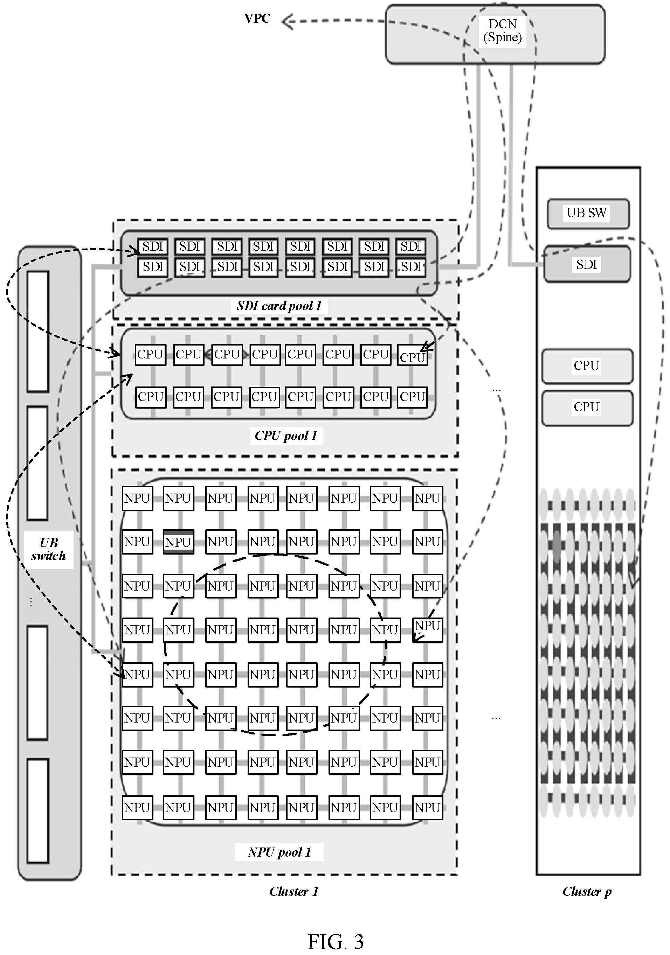

For example, as shown in FIG. 3 (where FIG. 3 is a diagram of another structure of a cluster according to an embodiment of this application), it is assumed that a cloud service system includes p clusters, namely a cluster 1, a cluster 2, a cluster 3, ..., and a cluster p. The cluster 1 includes an SDI card pool 1, a CPU pool 1, and an NPU pool 1. The SDI card pool 1 includes m SDI cards, the CPU pool 1 includes k interconnected CPUs, the NPU pool 1 includes h interconnected NPUs, and m SDI cards, k CPUs, and h NPUs each are connected to a UB switch. In other words, the SDI card pool 1 is connected to the CPU pool 1 and the NPU pool 1 through the UB switch, the CPU pool 1 and the NPU pool 1 are also connected through the UB switch, the CPUs in the CPU pool 1 are also connected through the UB switch, and the CPUs in the NPU pool 1 are also connected through the UB switch. p, m, k, and h are all greater than 1, and a sum of k and h is equal to n. It can be learned that, a ratio of SDI cards to xPUs (that is, CPUs+NPUs) is m:n. Certainly, the cluster 2 may also include an SDI card pool 2, a CPU pool 2, an NPU pool 2, a GPU pool 2, and the like. The same applies to the cluster 3 to the cluster p. Details are not described herein again.

It can be learned from FIG. 3 that, the SDI card pool 1, the SDI card pool 2, ..., an SDI card pool p may be connected to a DCN. Therefore, in the cluster 1, the CPUs in the CPU pool 1 and the NPUs in the NPU pool 1 may communicate, through SDI cards in the SDI card pool 1, with the cluster 2, the cluster 3, ..., the cluster p, and a virtual private cloud (virtual private cloud) in the system, that is, the exterior of the cluster 1. Further, in the cluster 1, the CPUs in the CPU pool 1 may communicate with the NPUs in the NPU pool 1 through the SDI cards in the SDI card pool 1. Further, in the cluster 1, the CPUs in the CPU pool 1 may communicate with each other through the SDI cards in the SDI card pool 1. Similarly, the NPUs in the NPU pool 1 may also communicate with each other through the SDI cards in the SDI card pool 1. Certainly, the same applies to the cluster 2 to the cluster p. Details are not described herein again.

Specifically, in the cluster, a plurality of data processing units included in a data processing unit pool may be presented in the following manner.

The plurality of data processing units include one or more general-purpose processing units (service processing units, SPUs) and a plurality of accelerated processing units (network processing units, NPUs). It should be noted that a quantity of data processing units is generally equal to a quantity of accelerated processing units, and the quantity of data processing units is generally greater than or equal to a quantity of general-purpose processing units. In other words, when there is one general-purpose processing unit, the general-purpose processing unit is configured to centrally manage the plurality of accelerated processing units, and when there are a plurality of general-purpose processing units, one general-purpose processing unit is configured to manage one of the plurality of accelerated processing units.

The one or more general-purpose processing units are configured to establish a first communication path (which may also be referred to as a slow communication path) between any compute resource in a plurality of compute resource pools and the exterior of the cluster, a first communication path between compute resources in any two of the compute resource pools, and a first communication path between two compute resources in any one of the compute resource pools. The plurality of accelerated processing units are configured to establish a second communication path (which may also be referred to as a fast communication path) between any compute resource in the plurality of compute resource pools and the exterior of the cluster, a second communication path between compute resources in any two of the compute resource pools, and a second communication path between two compute resources in any one of the compute resource pools.

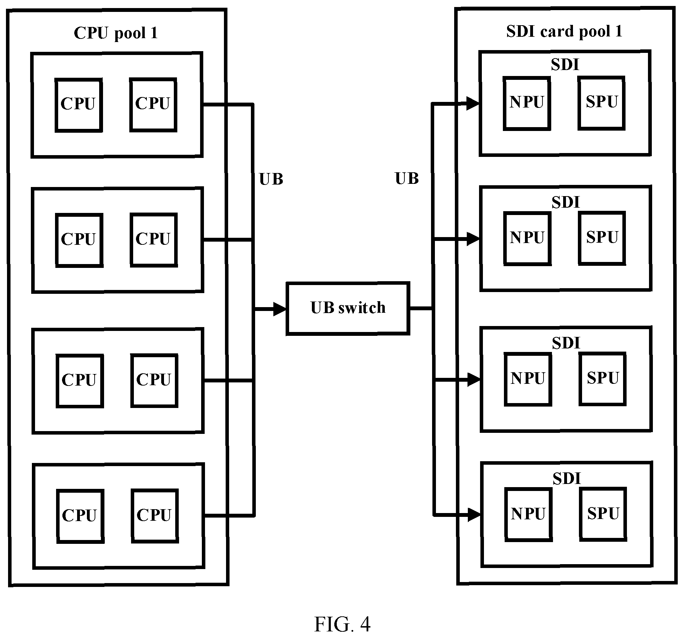

More specifically, in the cluster, a general-purpose processing unit and an accelerated processing unit may be disposed in the following plurality of manners.
(1) The general-purpose processing unit and the accelerated processing unit are coupled to each other. In this case, in the plurality of data processing units included in the data processing unit pool, there is one general-purpose processing unit and one accelerated processing unit inside any data processing unit. It should be noted that, for any data processing unit, a general-purpose processing unit and an accelerated processing unit in the data processing unit may be integrated into a same chip, or may be separately deployed in two different chips. This is not limited herein.
   Still refer to the foregoing example. As shown in FIG. 4 (where FIG. 4 is a diagram of another structure of a cluster according to an embodiment of this application, and FIG. 4 is drawn based on FIG. 3), in the cluster 1, for the m SDI cards included in the SDI card pool 1, each SDI card has one SPU and one NPU, and the SPU is configured to manage the corresponding NPU.
(2) The general-purpose processing unit and the accelerated processing unit are decoupled from each other. In this case, in the plurality of data processing units included in the data processing unit pool, there is only one accelerated processing unit inside any data processing unit. In addition, there is usually one general-purpose processing unit, and the general-purpose processing unit may be remotely deployed. In other words, the general-purpose processing unit is deployed in a compute resource pool or some compute resource pools, rather than in any data processing unit in the data processing unit pool. For example, a compute resource in a compute resource pool may be directly used as the general-purpose processing unit.

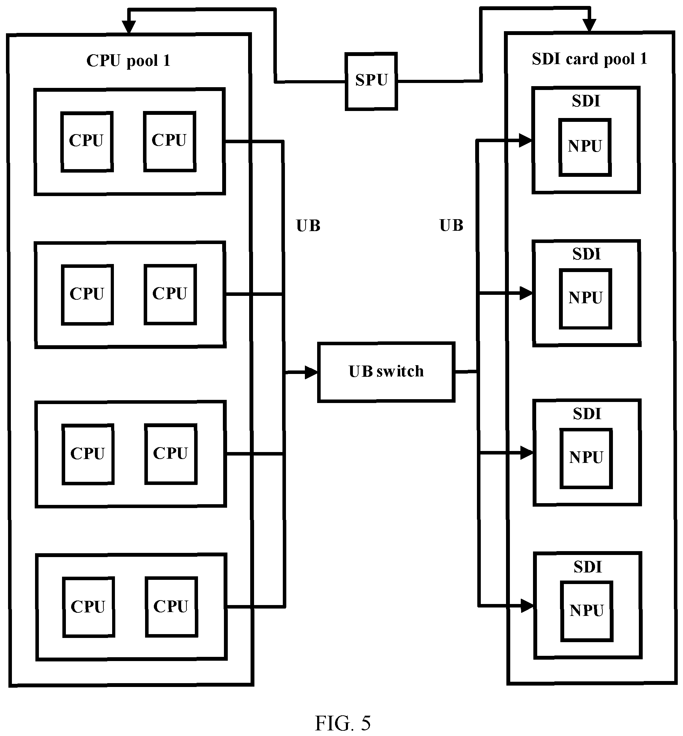

Still refer to the foregoing example. As shown in FIG. 5 (where FIG. 5 is a diagram of another structure of a cluster according to an embodiment of this application, and FIG. 5 is drawn based on FIG. 3), in the cluster 1, for the m SDI cards included in the SDI card pool 1, each SDI card has one NPU. It should be noted that an SPU is not deployed in the SDI card pool 1. Instead, one CPU selected from the CPU pool 1 is directly used as the SPU. The SPU is configured to centrally manage the m NPUs.

More specifically, in the cluster, the general-purpose processing unit and the accelerated processing units may establish the first communication path and the second communication path in the following manner.
(1) It is assumed that there is a packet to be sent to a compute resource in a compute resource pool. When receiving the packet, an accelerated processing unit may first determine, from a flow table of the accelerated processing unit, whether there is a flow entry that matches the packet. If there is no flow entry that matches the packet, the accelerated processing unit sends the packet to a general-purpose processing unit that manages the accelerated processing unit. Then, the general-purpose processing unit may determine, from a flow table of the general-purpose processing unit, a flow entry that matches the packet, and deliver the flow entry to the accelerated processing unit, so that the accelerated processing unit sends the packet to the compute resource based on the flow entry, and updates the flow entry to the flow table of the accelerated processing unit. In this way, if there is a new packet to be sent to the compute resource subsequently, the accelerated processing unit may directly send the new packet to the compute resource based on the flow entry. It can be learned from the foregoing process that the process is for establishing a communication path for transmitting the packet. From a start point of the communication path to an end point of the communication path, the communication path passes through a general-purpose processing unit and at least one accelerated processing unit (where in the foregoing process, in a process in which the accelerated processing unit sends the packet to the compute resource, the packet may further pass through another accelerated processing unit). Therefore, the communication path may be considered as a first communication path. Because of different start points and end points, first communication paths may be classified into the following three types.
   (1.1) If a start point of a first communication path is the exterior of the cluster, an end point is any compute resource in a plurality of compute resource pools, and the first communication path passes through a general-purpose processing unit and at least one accelerated processing unit, the first communication path may be considered as a first communication path between the compute resource and the exterior of the cluster. Still refer to the example shown in FIG. 5. If a VM 2 on a CPU in the CPU pool 2 (located in the cluster 2) needs to send a packet to a VM 1 on a CPU in the CPU pool 1 (located in the cluster 1), after the packet is received by an NPU in the SDI card pool 1, because there is no flow entry that matches the packet in a flow table of the NPU, the NPU sends the packet to an SPU. After the SPU delivers a flow entry that matches the packet to the NPU, the NPU may update the flow table of the NPU, and send the packet to the VM 1 based on the flow entry. It can be learned that a communication path for transmitting the packet successively passes through the VM 2 (the CPU in which the VM 2 is located), the NPU, the SPU, and the VM 1 (the CPU in which the VM 1 is located).
   (1.2) If a start point of a first communication path is a compute resource in a compute resource pool in a plurality of compute resource pools, an end point is a compute resource in another compute resource pool in the plurality of compute resource pools, and the first communication path passes through a general-purpose processing unit and at least one accelerated processing unit, the first communication path may be considered as a first communication path between compute resources in the two compute resource pools. Still refer to the example shown in FIG. 5. If a VM 3 on a CPU in the CPU pool 1 needs to send a packet to a VM 4 on an NPU in the NPU pool 1, after the packet is received by an NPU in the SDI card pool 1, because there is no flow entry that matches the packet in a flow table of the NPU, the NPU sends the packet to an SPU. After the SPU delivers a flow entry that matches the packet to the NPU, the NPU may update the flow table of the NPU, and send the packet to the VM 4 based on the flow entry. It can be learned that a communication path for transmitting the packet successively passes through the VM 3 (the CPU in which the VM 3 is located), the NPU, the SPU, and the VM 4 (the CPU in which the VM 4 is located).
   (1.3) If a start point of a first communication path is a compute resource in a compute resource pool in a plurality of compute resource pools, an end point is another compute resource in the compute resource pool, and the first communication path passes through a general-purpose processing unit and at least one accelerated processing unit, the first communication path may be considered as a first communication path between two compute resources in the compute resource pool. Still refer to the example shown in FIG. 5. If a VM 5 on a CPU in the CPU pool 1 needs to send a packet to a VM 6 on another CPU in the CPU pool 1, after the packet is received by an NPU in the SDI card pool 1, because there is no flow entry that matches the packet in a flow table of the NPU, the NPU sends the packet to an SPU. After the SPU delivers a flow entry that matches the packet to the NPU, the NPU may update the flow table of the NPU, and send the packet to the VM 6 based on the flow entry. It can be learned that a communication path for transmitting the packet successively passes through the VM 4 (the CPU in which the VM 4 is located), the NPU, the SPU, and the VM 6 (the CPU in which the VM 6 is located).
   (2) It is assumed that there is a packet to be sent to a compute resource in a compute resource pool. When receiving the packet, an accelerated processing unit may first determine, from a flow table of the accelerated processing unit, whether there is a flow entry that matches the packet. If there is a flow entry that matches the packet, the accelerated processing unit directly sends the packet to the compute resource based on the flow entry. It can be learned from the foregoing process that the process is for establishing a communication path for transmitting the packet. From a start point of the communication path to an end point of the communication path, the communication path passes only through at least one accelerated processing unit (where in the foregoing process, in a process in which the accelerated processing unit sends the packet to the compute resource, the packet may further pass through another accelerated processing unit) without passing through a general-purpose processing unit. Therefore, the communication path may be considered as a second communication path. Because of different start points and end points, second communication paths may be classified into the following three types.
      (2.1) If a start point of a second communication path is the exterior of the cluster, an end point is any compute resource in a plurality of compute resource pools, and the second communication path passes through at least one accelerated processing unit, the second communication path may be considered as a second communication path between the compute resource and the exterior of the cluster. Still refer to the example shown in FIG. 5. If a VM 2 on a CPU in the CPU pool 2 (located in the cluster 2) needs to send a packet to a VM 1 on a CPU in the CPU pool 1 (located in the cluster 1), after the packet is received by an NPU in the SDI card pool 1, because there is a flow entry that matches the packet in a flow table of the NPU, the NPU sends the packet to the VM 1 based on the flow entry. It can be learned that a communication path for transmitting the packet successively passes through the VM 2 (the CPU in which the VM 2 is located), the NPU, and the VM 1 (the CPU in which the VM 1 is located).
      (2.2) If a start point of a second communication path is a compute resource in a compute resource pool in a plurality of compute resource pools, an end point is a compute resource in another compute resource pool in the plurality of compute resource pools, and the second communication path passes through at least one accelerated processing unit, the second communication path may be considered as a second communication path between compute resources in the two compute resource pools. Still refer to the example shown in FIG. 5. If a VM 3 on a CPU in the CPU pool 1 needs to send a packet to a VM 4 on an NPU in the NPU pool 1, after the packet is received by an NPU in the SDI card pool 1, because there is a flow entry that matches the packet in a flow table of the NPU, the NPU sends the packet to the VM 4 based on the flow entry. It can be learned that a communication path for transmitting the packet successively passes through the VM 3 (the CPU in which the VM 3 is located), the NPU, and the VM 4 (the CPU in which the VM 4 is located).
      (2.3) If a start point of a second communication path is a compute resource in a compute resource pool in a plurality of compute resource pools, an end point is another compute resource in the compute resource pool, and the second communication path passes through at least one accelerated processing unit, the second communication path may be considered as a second communication path between two compute resources in the compute resource pool. Still refer to the example shown in FIG. 5. If a VM 5 on a CPU in the CPU pool 1 needs to send a packet to a VM 6 on another CPU in the CPU pool 1, after the packet is received by an NPU in the SDI card pool 1, because there is a flow entry that matches the packet in a flow table of the NPU, the NPU sends the packet to the VM 6 based on the flow entry. It can be learned that a communication path for transmitting the packet successively passes through the VM 4 (the CPU in which the VM 4 is located), the NPU, and the VM 6 (the CPU in which the VM 6 is located).

It should be understood that, in embodiments of this application, only an example in which a compute resource in the cluster is an end point of a communication path, and the exterior of the cluster or another compute resource in the cluster is a start point of the communication path is used for description. During actual application, the two may also be exchanged. In other words, alternatively, a compute resource in the cluster may be a start point of a communication path, and the exterior of the cluster or another compute resource in the cluster is an end point of the communication path. Details are not described herein.

More specifically, in the cluster, the general-purpose processing unit may further manage the plurality of accelerated processing units in the following manner.

When any compute resource in a plurality of compute resource pools has a communication requirement (for example, when the general-purpose processing unit determines that the compute resource has been started, the compute resource may be considered as having a communication requirement, and the general-purpose processing unit may actively allocate an accelerated processing unit to the compute resource; or for another example, the compute resource may notify the general-purpose processing unit that the compute resource has a communication requirement, and the compute resource may apply, from the general-purpose processing unit, for an accelerated processing unit needed by the compute resource), the general-purpose processing unit may allocate at least one of the plurality of accelerated processing units to the compute resource, in other words, establish a connection between the compute resource and the at least one accelerated processing unit allocated to the compute resource, so that the at least one accelerated processing unit allocated to the compute resource can meet the communication requirement of the compute resource.

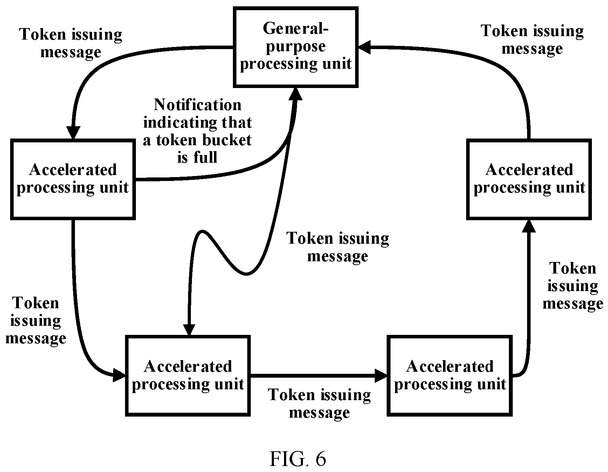

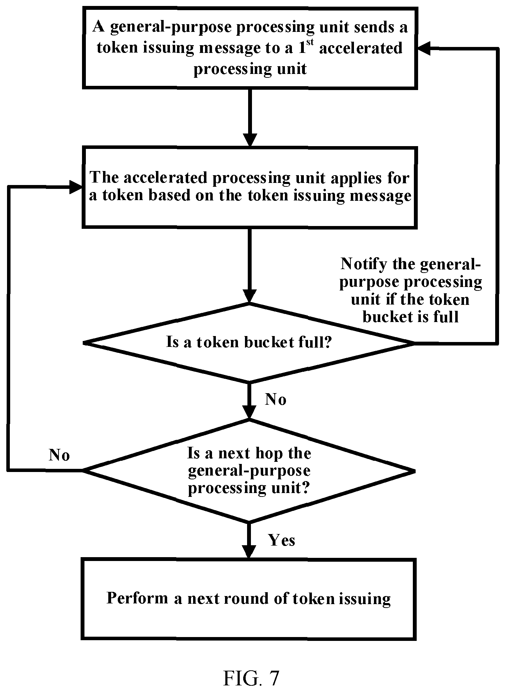

For example, the general-purpose processing unit may establish connections between the plurality of accelerated processing units and compute resources in the plurality of compute resource pools by issuing tokens. A token issuing procedure is shown in FIG. 6 and FIG. 7 (where FIG. 6 is a diagram of a structure of token issuing according to an embodiment of this application, and FIG. 7 is a schematic flowchart of token issuing according to an embodiment of this application). It is assumed that the cluster has one general-purpose processing unit, the general-purpose processing unit serves as a token issuing module, and each accelerated processing unit serves as a token receiving module. Each accelerated processing unit has a token bucket, and a capacity of the token bucket is limited, in other words, a quantity of tokens that each accelerated processing unit can receive is limited.

Because a token issuing procedure is a multi-round procedure, and a process of each round is similar, the following uses a round as an example for description. In a round of token issuing, the general-purpose processing unit sends a token issuing message to a 1^{st} accelerated processing unit. The accelerated processing unit applies for a token based on the message, and establishes a connection to a compute resource. Then, the accelerated processing unit may determine whether a token bucket of the accelerated processing unit is full. If the token bucket is full, it indicates that all tokens are obtained, and the general-purpose processing unit is notified, so that the general-purpose processing unit removes the accelerated processing unit from the plurality of accelerated processing units. Then, the accelerated processing unit may continue to send the token issuing message to a next accelerated processing unit until the token issuing message is returned to the general-purpose processing unit. In this way, this round of token issuing is completed, and a next round of token issuing may start. In this case, after the general-purpose processing unit completes token issuing for all the accelerated processing units, any one of the plurality of accelerated processing units is connected to at least one compute resource. It can be learned that, for any one of the plurality of accelerated processing units, a quantity of tokens that can be received by the accelerated processing unit is equal to a quantity of compute resources that can be connected to the accelerated processing unit.

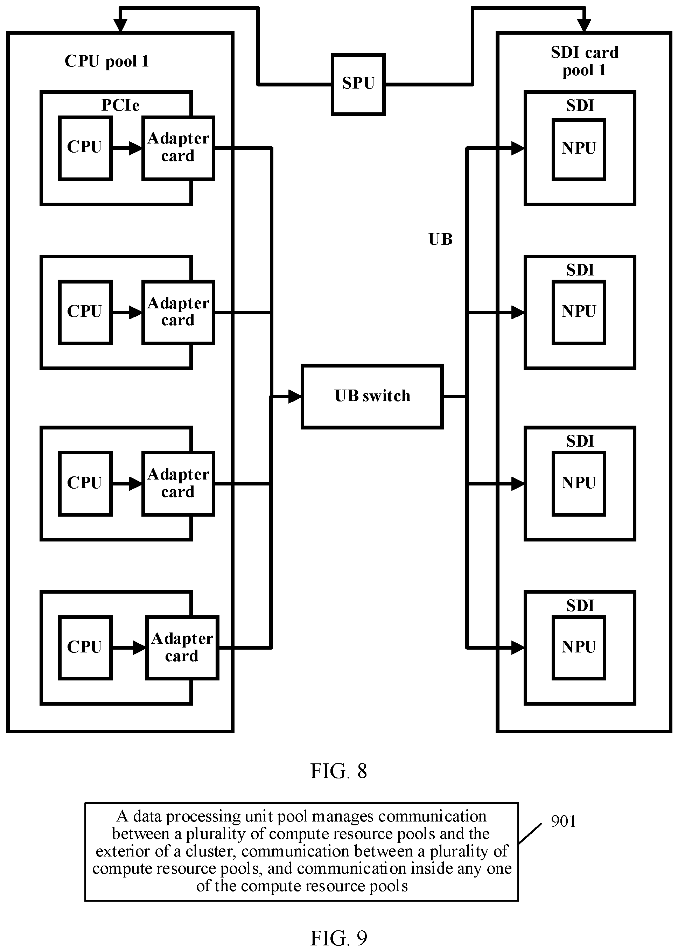

More specifically, in the cluster, an accelerated processing unit and a compute resource may be connected in the following manners.
(1) When a high-speed interconnect bus supported by an accelerated processing unit and a high-speed interconnect bus supported by a compute resource are the same, the compute resource and the accelerated processing unit may be connected through the high-speed interconnect bus. Examples are shown in FIG. 4 and FIG. 5.
(2) When a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit. The adapter device is configured to implement conversion between the high-speed interconnect bus supported by the compute resource and the high-speed interconnect bus supported by the accelerated processing unit. For example, as shown in FIG. 8 (where FIG. 8 is a diagram of another structure of a cluster according to an embodiment of this application, and FIG. 8 is drawn based on FIG. 3), in the cluster 1, for the m SDI cards included in the SDI card pool 1, each SDI card has one NPU. It should be noted that, a high-speed interconnect bus supported by the m NPUs in the SDI card pool 1 is a UB, and a high-speed interconnect bus supported by the k CPUs in the CPU pool 1 is a PCIe bus. Therefore, the k CPUs are all connected to a UB switch through adapter cards, to implement communication with the m NPUs.

An embodiment of this application provides a cluster disposed in a cloud service system. The cluster has the following advantages.
(1) In the cluster, compute resources of various types are deployed in a pooled manner. The plurality of compute resource pools are decoupled and may be configured based on a type of a cloud service that needs to be provided by the cluster, to improve performance and resource utilization of the cluster. In the cluster, data processing units are also deployed in a pooled manner to form a data processing unit pool that serves as a communication scheduling center of the cluster, to implement centralized allocation and utilization of the data processing units in the pool, so as to improve utilization of the data processing units.
(2) In the cluster, the data processing unit pool and the plurality of compute resource pools are connected through a high-speed interconnect bus. In other words, a connection between the plurality of compute resource pools and the exterior of the cluster, a connection between the plurality of compute resource pools, and a connection inside any one of the compute resource pools are all implemented through the high-speed interconnect bus. When the high-speed interconnect bus can provide sufficient bandwidth, external and internal communication speeds of the cluster can be increased, and costs needed by the cluster can be reduced.
(3) In the cluster, compute resources can be combined in a building-block manner. For example, a flexible ratio among CPUs, NPUs, and GPUs may be implemented and unified management may be implemented on a software level.
(4) If the cluster is configured to externally provide an AI service on a cloud, the cluster includes the data processing unit pool, the data processing unit pool has a plurality of data processing units to provide sufficiently strong data processing capabilities. In addition, the high-speed interconnect bus provides sufficient bandwidth. Therefore, the data processing unit pool of the cluster can support transmission of a large quantity of model parameters needed during AI model training, to improve reliability during model training and reduce occurrence of model training interruption and the like caused by a network.
(5) In the cluster, a general-purpose processing unit and an accelerated processing unit included in the data processing unit may be deployed in a decoupled manner, in other words, deployed separately, to further free up a chip area occupied by the general-purpose processing unit and the accelerated processing unit, so as to implement pooled deployment of the accelerated processing unit and centralized deployment of the general-purpose processing unit, and provide a flexible scale-out capability.
(6) In the cluster, a memory pool including a plurality of memories may be configured. Compute resources in compute resource pools of other types, such as a CPU, an NPU, and a GPU, may use more memories in the memory pool, so that a CPU, an NPU, and a GPU in a physical server are not limited to using a memory in the physical server, to form a memory sharing (borrowing) scenario and provide extremely low latency.
(7) The cluster provides a vertically-integrated hardware-and-software platform. In other words, all pools in the cluster form a rack-level resource set, to uniformly support, at an abstraction layer, management of rack-level resources such as compute resources, heterogeneous resources, and storage resources and traffic egress.
(8) In the cluster, a data processing unit pool including a plurality of data processing units may be configured, and is used as rack-level traffic egress, to implement a resource management and scheduling scheme for distributed traffic. In this way, pooled management with an m:n mapping can be implemented between the data processing unit and compute resources, to implement a multi-fold increase in bandwidth that can be used by all compute resources in the cluster. In addition, such deployment may also simplify a form of the physical server, and cause the plurality of data processing units to implement overcommitment between compute resources of different types, so as to reduce costs.
(9) In the cluster, the data processing unit pool is deployed remotely, and key problems such as "head-of-line blocking" (head-of-line blocking, HOL blocking) and congestion are effectively resolved.
(10) In the cluster, a configuration between a data processing unit and a compute resource may be an m:n configuration. When the compute resource and the data processing unit are processing a user service, regardless of whether a fault occurs in the compute resource or in the data processing unit, active/standby switchover can be quickly initiated, to implement service failover. A user perceives second-level switchover, to improve user experience.
(11) In the cluster, a general-purpose processing unit may be integrated on one chip. Compared with a previous case in which one general-purpose processing unit and one accelerated processing unit are integrated into one card, in this case, a chip area occupied by the general-purpose processing unit can be reduced, and utilization of the general-purpose processing unit can be improved.
(12) In the cluster, a switch may collaboratively implement online computing (all reduce and scatter-gather), database acceleration (DB filter, table scan, and regular expression), hash acceleration, and the like.
(13) In the cluster, a core statically allocated to a current data plane may be centrally managed as a resource pool, to improve utilization of compute resources and reduce occupancy of the compute resources.
(14) In the cluster, compute resources of various types are compatible with conventional PCIe-based types, for example, virtio and nvme, and also support a new ecosystem based on a new high-speed interconnect bus, to facilitate system implementations in various scenarios.
(15) In the cluster, if a high-speed interconnect bus supported by the compute resource and a high-speed interconnect bus supported by a data processing unit are different, the compute resource and the data processing unit may be unified to a same high-speed interconnect bus scheme via an adapter device, so that the system can be applied in a wider range of scenarios.
(16) In the cluster, memory borrowing and unified addressing are supported between networked xPUs. With support of the high-speed interconnect bus, live memory migration with ultra-large bandwidth can be implemented.
(17) The cluster supports a vfio/vdpa-based device passthrough scheme with pin-free memory, memory overcommitment and multiplexing, and the like.

The foregoing describes the cluster provided in embodiments of this application in detail. The following describes a communication method provided in embodiments of this application. FIG. 9 is a diagram of a communication method according to an embodiment of this application. As shown in FIG. 9, the method is implemented by using a cluster shown in FIG. 2. The cluster includes a data processing unit pool and a plurality of compute resource pools of different types. The data processing unit pool includes a plurality of data processing units. Any one of the plurality of compute resource pools includes a plurality of compute resources. The data processing unit pool is connected to the plurality of compute resource pools through a high-speed interconnect bus. The method includes the following steps.

901: The data processing unit pool manages communication between the plurality of compute resource pools and the exterior of the cluster, communication between the plurality of compute resource pools, and communication inside any one of the compute resource pools.

In a possible implementation, the plurality of data processing units include a general-purpose processing unit and a plurality of accelerated processing units. That the data processing unit pool manages communication between the plurality of compute resource pools and the exterior of the cluster, communication between the plurality of compute resource pools, and communication inside any one of the compute resource pools includes: The general-purpose processing unit establishes a first communication path between the plurality of compute resource pools and the exterior of the cluster, a first communication path between the plurality of compute resource pools, and a first communication path inside any one of the compute resource pools. The plurality of accelerated processing units establishes a second communication path between the plurality of compute resource pools and the exterior of the cluster, a second communication path between the plurality of compute resource pools, and a second communication path inside any one of the compute resource pools.

In a possible implementation, the data processing unit pool and the plurality of compute resource pools are configured in a plurality of racks, and a rack in which the data processing unit pool is configured and a rack in which any one of the compute resource pools is configured are different racks.

In a possible implementation, the plurality of data processing units include a general-purpose processing unit and a plurality of accelerated processing units. The method further includes: The general-purpose processing unit allocates at least one of the plurality of accelerated processing units to a compute resource that has a communication requirement in the plurality of compute resource pools, to cause the at least one accelerated processing unit allocated to the compute resource to meet the communication requirement of the compute resource.

In a possible implementation, the general-purpose processing unit and the plurality of accelerated processing units are deployed inside the data processing unit pool.

In a possible implementation, the plurality of accelerated processing units are deployed inside the data processing unit pool, the general-purpose processing unit is deployed outside the data processing unit pool, and the exterior of the data processing unit pool is the interior of at least one compute resource pool.

In a possible implementation, the first communication path between the plurality of compute resource pools and the exterior of the cluster, with any compute resource in the plurality of compute resource pools and the exterior of the cluster as endpoints, passes through the general-purpose processing unit and at least one of the plurality of accelerated processing units. The first communication path between the plurality of compute resource pools, with compute resources in any two of the compute resource pools as endpoints, passes through the general-purpose processing unit and at least one of the plurality of accelerated processing units. The first communication path inside any one of the compute resource pools, with two compute resources in any one of the compute resource pools as endpoints, passes through the general-purpose processing unit and at least one of the plurality of accelerated processing units.

In a possible implementation, the second communication path between the plurality of compute resource pools and the exterior of the cluster, with any compute resource in the plurality of compute resource pools and the exterior of the cluster as endpoints, passes through at least one of the plurality of accelerated processing units. The second communication path between the plurality of compute resource pools, with compute resources in any two of the compute resource pools as endpoints, passes through at least one of the plurality of accelerated processing units. The second communication path inside any one of the compute resource pools, with two compute resources in any one of the compute resource pools as endpoints, passes through at least one of the plurality of accelerated processing units.

In a possible implementation, the method further includes: The general-purpose processing unit establishes connections between the plurality of accelerated processing units and compute resources in the plurality of compute resource pools by issuing tokens. For any one of the plurality of accelerated processing units, a quantity of tokens that can be received by the accelerated processing unit is equal to a quantity of compute resources that can be connected to the accelerated processing unit.

In a possible implementation, when a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit.

In a possible implementation, the plurality of compute resource pools include at least two of the following: a CPU pool, an NPU pool, a GPU pool, a memory pool, and an SSD pool. The CPU pool includes a plurality of CPUs, the NPU pool includes a plurality of NPUs, the GPU pool includes a plurality of GPUs, the memory pool includes a plurality of memories, and the SSD pool includes a plurality of SSDs.

In a possible implementation, any one of the compute resource pools includes a plurality of compute resources for deploying a cloud instance that provides a cloud service, and the cloud instance includes any one of the following: a compute resource, a virtual machine, a container, and a micro virtual machine.

It should be noted that, because content such as an implementation process of steps in the foregoing method is based on a same concept as the apparatus embodiment of this application, technical effects brought by the content are the same as those brought by the method embodiment of this application. For specific content, refer to the descriptions in the foregoing apparatus embodiment of embodiments of this application. Details are not described herein again.

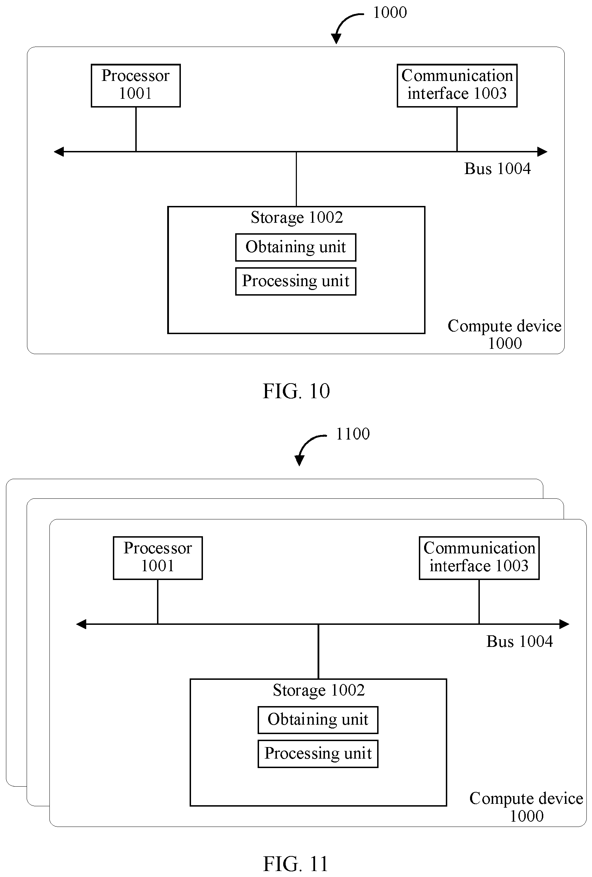

FIG. 10 is a diagram of a structure of a compute device according to an embodiment of this application. As shown in FIG. 10, the compute device 1000 includes a processor 1001, a storage 1002, a communication interface 1003, and a bus 1004. The processor 1001, the storage 1002, and the communication interface 1003 are coupled through a bus (not marked in the figure). The storage 1002 stores instructions. When execution instructions in the storage 1002 is executed, the compute device 1000 performs the communication method in the foregoing method embodiment.

The compute device 1000 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

The processor 1001 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The storage 1002 may be a volatile storage or a nonvolatile storage, or may include both a volatile storage and a nonvolatile storage. The nonvolatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 1002 stores executable program code, and the processor 1001 executes the executable program code to separately implement functions of the modules such as the general-purpose processing unit and the accelerated processing unit, to implement the foregoing communication method. In other words, the storage 1002 stores instructions for performing the communication method.

The communication interface 1003 uses a transceiver module, for example, but not limited to, a network interface card or a transceiver, to implement communication between the compute device 1000 and another device or a communication network.

The bus 1004 may include a power bus, a control bus, a status signal bus, and the like in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

FIG. 11 is a diagram of a structure of a compute device cluster according to an embodiment of this application. As shown in FIG. 11, the compute device cluster 1100 includes at least one compute device 1000.

As shown in FIG. 11, the compute device cluster 1100 includes at least one compute device 1000. Storages 1002 in one or more compute devices 1000 in the compute device cluster 1100 may store same instructions for performing the foregoing communication method.

In some possible implementations, the storages 1002 in the one or more compute devices 1000 in the compute device cluster 1100 may separately store a part of instructions for performing the communication method. In other words, a combination of the one or more compute devices 1000 may jointly perform the foregoing communication method.

It should be noted that the storages 1002 in different compute devices 1000 in the compute device cluster 1100 may store different instructions for separately performing a part of functions of the foregoing data processing unit. In other words, instructions stored in the storages 1002 in different compute devices 1000 may implement functions of one or more of modules such as a general-purpose processing unit and an accelerated processing unit.

In some possible implementations, the one or more compute devices 1000 in the compute device cluster 1100 may be connected through a network. The network may be a wide area network, a local area network, or the like.

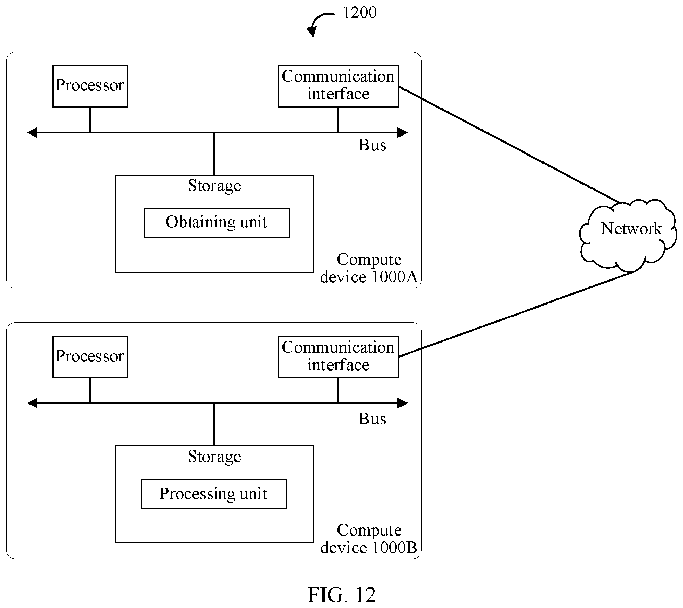

FIG. 12 is a diagram of a computer cluster in which computer devices are connected through a network according to an embodiment of this application. As shown in FIG. 12, two compute devices 1000A and 1000B are connected through a network. Specifically, each compute device is connected to the network through a communication interface in the compute device.

In a possible implementation, a storage in the compute device 1000A stores instructions for performing a function of a module such as a general-purpose processing unit. In addition, a storage in the compute device 1000B stores instructions for performing a function of a module such as an accelerated processing unit.

It should be understood that a function of the compute device 1000A shown in FIG. 12 may alternatively be completed by a plurality of compute devices. Similarly, a function of the compute device 1000B may alternatively be completed by a plurality of compute devices.

An embodiment of this application further relates to a computer storage medium. The computer-readable storage medium stores a program for signal processing. When the program is run on a computer, the computer is caused to perform the communication method in the embodiment shown in FIG. 9.

An embodiment of this application further relates to a computer program product. The computer program product stores instructions, and when the instructions are executed by a computer, the computer is caused to perform the communication method in the embodiment shown in FIG. 9.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for enabling a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A cluster, wherein the cluster comprises a data processing unit pool and a plurality of compute resource pools of different types, the data processing unit pool comprises a plurality of data processing units, and any one of the plurality of compute resource pools comprises a plurality of compute resources;
the data processing unit pool is connected to the plurality of compute resource pools through a high-speed interconnect bus; and
the data processing unit pool is configured to manage communication between the plurality of compute resource pools and the exterior of the cluster, communication between the plurality of compute resource pools, and communication inside any one of the compute resource pools.

2. The cluster according to claim 1, wherein the data processing unit pool and the plurality of compute resource pools are configured in a plurality of racks, and a rack in which the data processing unit pool is configured and a rack in which any one of the compute resource pools is configured are different racks.

3. The cluster according to claim 2, wherein the plurality of data processing units comprise a general-purpose processing unit and a plurality of accelerated processing units, and the general-purpose processing unit is configured to allocate at least one of the plurality of accelerated processing units to a compute resource that has a communication requirement in the plurality of compute resource pools, and the at least one accelerated processing unit allocated to the compute resource is configured to meet the communication requirement of the compute resource.

4. The cluster according to claim 3, wherein the general-purpose processing unit is configured to establish a first communication path between the plurality of compute resource pools and the exterior of the cluster, a first communication path between the plurality of compute resource pools, and a first communication path inside any one of the compute resource pools; and
the plurality of accelerated processing units are configured to establish a second communication path between the plurality of compute resource pools and the exterior of the cluster, a second communication path between the plurality of compute resource pools, and a second communication path inside any one of the compute resource pools.

5. The cluster according to claim 3 or 4, wherein the general-purpose processing unit and the plurality of accelerated processing units are deployed inside the data processing unit pool.

6. The cluster according to claim 3 or 4, wherein the plurality of accelerated processing units are deployed inside the data processing unit pool, the general-purpose processing unit is deployed outside the data processing unit pool, and the exterior of the data processing unit pool is the interior of at least one compute resource pool.

7. The cluster according to any one of claims 3 to 6, wherein the first communication path between the plurality of compute resource pools and the exterior of the cluster, with any compute resource in the plurality of compute resource pools and the exterior of the cluster as endpoints, passes through the general-purpose processing unit and at least one of the plurality of accelerated processing units;
the first communication path between the plurality of compute resource pools, with compute resources in any two of the compute resource pools as endpoints, passes through the general-purpose processing unit and at least one of the plurality of accelerated processing units; and
the first communication path inside any one of the compute resource pools, with two compute resources in any one of the compute resource pools as endpoints, passes through the general-purpose processing unit and at least one of the plurality of accelerated processing units.

8. The cluster according to any one of claims 3 to 6, wherein the second communication path between the plurality of compute resource pools and the exterior of the cluster, with any compute resource in the plurality of compute resource pools and the exterior of the cluster as endpoints, passes through at least one of the plurality of accelerated processing units;
the second communication path between the plurality of compute resource pools, with compute resources in any two of the compute resource pools as endpoints, passes through at least one of the plurality of accelerated processing units; and
the second communication path inside any one of the compute resource pools, with two compute resources in any one of the compute resource pools as endpoints, passes through at least one of the plurality of accelerated processing units.

9. The cluster according to any one of claims 2 to 8, wherein when a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit.

10. The cluster according to any one of claims 1 to 9, wherein the plurality of compute resource pools comprise at least two of the following: a central processing unit CPU pool, a neural network processing unit NPU pool, a graphics processing unit GPU pool, a memory pool, and a solid-state disk SSD pool, the CPU pool comprises a plurality of CPUs, the NPU pool comprises a plurality of NPUs, the GPU pool comprises a plurality of GPUs, the memory pool comprises a plurality of memories, and the SSD pool comprises a plurality of SSDs.

11. The cluster according to any one of claims 1 to 10, wherein any one of the compute resource pools comprises a plurality of compute resources for deploying a cloud instance that provides a cloud service, and the cloud instance comprises any one of the following: a compute resource, a virtual machine, a container, and a micro virtual machine.

12. A communication method, wherein the method is implemented by using a cluster, the cluster comprises a data processing unit pool and a plurality of compute resource pools of different types, the data processing unit pool comprises a plurality of data processing units, any one of the plurality of compute resource pools comprises a plurality of compute resources, and the data processing unit pool is connected to the plurality of compute resource pools through a high-speed interconnect bus; and
the method comprises:
managing, by the data processing unit pool, communication between the plurality of compute resource pools and the exterior of the cluster, communication between the plurality of compute resource pools, and communication inside any one of the compute resource pools.

13. The method according to claim 12, wherein the data processing unit pool and the plurality of compute resource pools are configured in a plurality of racks, and a rack in which the data processing unit pool is configured and a rack in which any one of the compute resource pools is configured are different racks.

14. The method according to claim 13, wherein the plurality of data processing units comprise a general-purpose processing unit and a plurality of accelerated processing units, and the method further comprises:
allocating, by the general-purpose processing unit, at least one of the plurality of accelerated processing units to a compute resource that has a communication requirement in the plurality of compute resource pools, to cause the at least one accelerated processing unit allocated to the compute resource to meet the communication requirement of the compute resource.

15. The method according to claim 14, wherein the plurality of data processing units comprise a general-purpose processing unit and a plurality of accelerated processing units, and the managing, by the data processing unit pool, communication between the plurality of compute resource pools and the exterior of the cluster, communication between the plurality of compute resource pools, and communication inside any one of the compute resource pools comprises:
establishing, by the general-purpose processing unit, a first communication path between the plurality of compute resource pools and the exterior of the cluster, a first communication path between the plurality of compute resource pools, and a first communication path inside any one of the compute resource pools; and
establishing, by the plurality of accelerated processing units, a second communication path between the plurality of compute resource pools and the exterior of the cluster, a second communication path between the plurality of compute resource pools, and a second communication path inside any one of the compute resource pools.

16. The method according to claim 14 or 15, wherein the general-purpose processing unit and the plurality of accelerated processing units are deployed inside the data processing unit pool.

17. The method according to claim 14 or 15, wherein the plurality of accelerated processing units are deployed inside the data processing unit pool, the general-purpose processing unit is deployed outside the data processing unit pool, and the exterior of the data processing unit pool is the interior of at least one compute resource pool.

18. The method according to any one of claims 14 to 17, wherein the first communication path between the plurality of compute resource pools and the exterior of the cluster, with any compute resource in the plurality of compute resource pools and the exterior of the cluster as endpoints, passes through the general-purpose processing unit and at least one of the plurality of accelerated processing units;
the first communication path between the plurality of compute resource pools, with compute resources in any two of the compute resource pools as endpoints, passes through the general-purpose processing unit and at least one of the plurality of accelerated processing units; and
the first communication path inside any one of the compute resource pools, with two compute resources in any one of the compute resource pools as endpoints, passes through the general-purpose processing unit and at least one of the plurality of accelerated processing units.

19. The method according to any one of claims 14 to 18, wherein the second communication path between the plurality of compute resource pools and the exterior of the cluster, with any compute resource in the plurality of compute resource pools and the exterior of the cluster as endpoints, passes through at least one of the plurality of accelerated processing units;
the second communication path between the plurality of compute resource pools, with compute resources in any two of the compute resource pools as endpoints, passes through at least one of the plurality of accelerated processing units; and
the second communication path inside any one of the compute resource pools, with two compute resources in any one of the compute resource pools as endpoints, passes through at least one of the plurality of accelerated processing units.

20. The method according to any one of claims 13 to 19, wherein when a high-speed interconnect bus supported by an accelerated processing unit and a high-speed interconnect bus supported by a compute resource are different, the compute resource and the accelerated processing unit are connected through the high-speed interconnect bus supported by the compute resource, an adapter device, and the high-speed interconnect bus supported by the accelerated processing unit.

21. The method according to any one of claims 12 to 20, wherein the plurality of compute resource pools comprise at least two of the following: a CPU pool, an NPU pool, a GPU pool, a memory pool, and an SSD pool, the CPU pool comprises a plurality of CPUs, the NPU pool comprises a plurality of NPUs, the GPU pool comprises a plurality of GPUs, the memory pool comprises a plurality of memories, and the SSD pool comprises a plurality of SSDs.

22. The method according to any one of claims 12 to 21, wherein any one of the compute resource pools comprises a plurality of compute resources for deploying a cloud instance that provides a cloud service, and the cloud instance comprises any one of the following: a compute resource, a virtual machine, a container, and a micro virtual machine.

23. A cloud service system, wherein the cloud service system comprises a plurality of clusters according to any one of claims 1 to 11.

24. A compute device cluster, wherein the compute device cluster comprises at least one compute device, and each compute device comprises a processor and a storage;
the storage is configured to store instructions; and
the processor is configured to cause, based on the instructions, the compute device cluster to perform the method according to any one of claims 12 to 22.

25. A computer storage medium, wherein the computer storage medium stores one or more instructions, and when the instructions are executed by one or more computers, the one or more computers are caused to implement the method according to any one of claims 12 to 22.

26. A computer program product, wherein the computer program product stores instructions, and when the instructions are executed by a computer, the computer is caused to implement the method according to any one of claims 12 to 22.
